Europäisches Patentamt

European Patent Office

Office européen des brevets

(11) Publication number: **0 332 417 B1**

# EUROPEAN PATENT SPECIFICATION

(45) Date of publication of patent specification: **16.02.94**  (51) Int. Cl.⁵: **G06F 13/36**, G06F 13/38

(21) Application number: **89302299.6**

(22) Date of filing: **08.03.89**

(54) **Image data handling.**

(30) Priority: **10.03.88 GB 8805668**

(43) Date of publication of application:
**13.09.89 Bulletin 89/37**

(45) Publication of the grant of the patent:
**16.02.94 Bulletin 94/07**

(84) Designated Contracting States:
**DE GB**

(56) References cited:
**US-A- 4 158 235**
**US-A- 4 174 536**
**US-A- 4 470 115**
**US-A- 4 688 168**

**PATENT ABSTRACTS OF JAPAN, vol. 5, no.
173 (P-87)[845], 5th November 1981; & JP-
A-56 101 260 (MITSUBISHI DENKI K.K.)
13-08-1981**

(73) Proprietor: **CROSFIELD ELECTRONICS LIMIT-
ED**
**Three Cherry Trees Lane**
**Hemel Hempstead Hertfordshire HP2
7RH(GB)**

(72) Inventor: **Mayne, Clive**
**184 East Lane**
**North Wembley London(GB)**
Inventor: **Macdonald, Lindsay**
**41 Station Road**
**Cheddington**
**Leighton Buzzard Bedfordshire LU7 O5G(GB)**
Inventor: **Stamp, Gary**
**6 Miletree Crescent**
**Dunstable Bedfordshire(GB)**

(74) Representative: **Skone James, Robert Edmund
et al**
**GILL JENNINGS & EVERY**
**Broadgate House**
**7 Eldon Street**
**London EC2M 7LH (GB)**

EP 0 332 417 B1

EP 0 332 417 B1

**Description**

The invention relates to methods and apparatus for handling data defining the colour content of pixels of an image.

In the field of digital image processing, a wide variety of image data generating or processing devices has been developed such as input and output scanners, page planners, and display devices. Typically, these peripheral devices operate at different data rates which are also different from the data rates associated with data storage devices such as disk drives. In view of the large quantity of data involved in a typical digital representation of an image, conventional buffering techniques are not satisfactory since they can lead to significant breaks in operation of the system.

For example, typical input and output scanners supply or consume data at a rate of about 1 Mbyte/second. Conventional disk drives with a Small Computer Systems Interface (SCSI) transfer data at a typical rate of 2 Mbyte/second. A video frame store, however, many transfer data at rates up to 32 Mbyte/second. This disparity in data rates can lead to an imbalance when transferring images from one class of device to another, resulting in the faster device spending most of its time idle, waiting for the slower device. The problem is particularly apparent to a human operator initiating the transfer of a large image from a disk store to a display monitor. In graphics arts applications, images are typically scanned and stored at a spatial resolution of 12 pixels/mm, so that an A4 page of dimensions 297 by 210 mm would occupy 3564 by 2520 pixels, or about 36 Mbytes of disk memory at 4 bytes per pixel. In satellite image processing applications, images from the LANDSAT satellite are typically about 6000 pixels square, occupying 36 Mbytes of disk memory per spectral band. In either case the transfer would take at least 18 seconds to complete, limited by the speed of the disk. Even for an image of the same size as the display the transfer time may be significant, for example a colour image of 1280 by 1024 pixels occupies 5 Mbytes on disk, taking 2 - 3 seconds to transfer. Such delays impair the performance of a human operator, and it is highly desirable to minimise image retrieval times wherever possible.

US-A-4,688,168 describes a high speed data transfer method and apparatus in which data from a number of sources is interlaced on a data bus. This interlacing is achieved by allocating a certain number of bus cycles to each device in succession, the respective numbers of bus cycles being determined in accordance with the transfer rate of the devices. This can lead to difficulties when there is a need to reformat the data during transfer because such reformatting is not possible with the apparatus of this patent. The "interlacing" method of allocating bus cycles to pairs of sources and destination devices is a limiting approach, since it inevitably causes some wastage of bus bandwidth. The specification also describes the interleaving of data bits on a number of different disk drives. However, this is of limited use since the disk drives have to be sequentially driven to accommodate interleaving leading to the inefficient use of the drives because no allowance is made for the rotational latencies of individual disks.

In accordance with one aspect of the present invention, we provide a data handling device for handling data defining the colour content of pixels of an image, the device comprises a number of data transfer interfaces for interfacing a data bus to a number of peripheral devices and including a first group of interfaces for connection to at least two disk stores, and at least one second group of interfaces for connection to one of a data source and one of a data destination; said device further comprising control means for controlling the data transfer operations between selected pairs of the interfaces and predetermining the duration thereof; said device being characterised in that it further comprises a buffer connected to the data bus; in that the control means controls the transfer of data between selected pairs of the interfaces via the buffer such that each data transfer operation is carried out in a number of sequential but not necessarily consecutive subsidiary transfer operations, each of said subsidiary transfer operations being a non-interruptible data transfer between one of the selected interfaces and the buffer, the control means allowing interlacing of intermediate subsidiary transfer operations for other interfaces, and further predetermining the duration of the subsidiary transfer operations for each interface and the amount of memory required in the buffer to be allotted to each transfer operation, whereby the overall data transfer is optimised by maximizing the bus bandwidth being utilised and by enabling said data transfer operations to take place without interrupting the operation of the peripheral devices; in that the control means causes data defining two-dimensional blocks of pixels, each block made up by n x m pixels, where both n and m are greater than one and where each block corresponds to a number of sections of the original raster scanlines, to be stored on different disk stores connected to the first group of interfaces in use.

In contrast to the known data handling device described above, we incorporate an additional buffer connected to the data bus. This not only enables reformatting of the data to be achieved, if required, but also avoids the need to skip certain data transfer operations by one or more null cycles on the data bus which the known device has to do from time to time. Such skipping of bus cycles prevents the full bus

2

bandwidth being utilised and so leads to reduced efficiency. In asynchronously driven disk drives which are much cheaper than those required by the known device since in the invention complete data words, for example defining complete blocks of pixels, are stored on respective disks in contrast to the known device in which data defining the content of a single 32 bit word is spread across multiple heads of a parallel transfer disk device. The latter arrangement requires considerable precision in writing and reading the data and hence the need for expensive parallel head disk drives.

In contrast to the prior art this invention allows reformatting of the data as it is transferred to and from the disk drives to optimise the access of image data.

Also it enables data to be transferred from separate asynchronous disk drives and re-constituted into contiguous data prior to transfer to/from a raster device. This overcomes the need to use costly synchronised devices.

Furthermore, by pre-determination of the bandwidth requirement of a data transfer together with all other transfers in progress 'Interlacing' of the bus is determined on a demand basis by the source or destination device depending upon direction and nature of transfer so that the transfers are optimised. Fixed bus cycle allocation is not necessary.

The buffer may be provided by a single memory but could be constituted by a number of separate memories depending upon the construction of the device.

Preferably, the control means defines for each selected pair of interfaces a respective area of the buffer having two sections, the control means causing data in a first subsidiary transfer operation to be transferred from one interface to one section of the buffer, in a second subsidiary operation to cause data to be transferred from that section of the buffer to the other interface, in a third subsidiary transfer operation to cause data to be transferred from the one interface to the other section of the buffer, and in a fourth subsidiary operation to cause data from the second section to be transferred to the other interface. This allows the different data rates involved to be handled without interrupting transfer of data to or from the peripheral devices. The amount of data to be transferred, in terms of the length of the subsidiary transfer operation and the size of the buffer sections is optimised in a preliminary step by the control means.

This "double buffer" technique enables the control means to fill one section of the buffer area with data and then to fill one section of another buffer area corresponding to a different data transfer operation while the contents of the first buffer area section is being transferred to the other interface of the first pair. Since the data rate for that interface is known, the rate at which data is being fed from the one buffer area section is known and when the control means notes that the level of unread data in the one buffer area section is low, it can cause further data to be transferred from the one interface into the other section of the buffer area ready for transfer to the other interface once the first section has been fully read. In the interim between the two loading steps, further data can be transferred to or from the buffer in connection with other transfers.

The storage of data defining blocks of pixels enables a significant problem to be solved which arises when handling image data, due to the volume of data involved. Typically, an input scanner will scan an original image in a series of raster lines one pixel wide. However, when an operator wishes to view on a display monitor part of the scanned image, this will, in general, not conform to a number of complete raster lines. Thus, in known systems having a single disk store where the image is stored on disk as a sequence of raster lines, in order to read off the disk the data necessary to display the required part of the image, the disk reading head had to scan across a large amount of irrelevant data to locate the sections of each raster line of interest. This is overcome by the invention in which the image is stored in two dimensional blocks of pixels each block or tile corresponding to a number of sections of the original raster scanlines.

The size of each tile or block can be chosen empirically but preferably the number of bytes in each block is a multiple of the size of a formatted disk sector, for example 8 disk sectors of 512 bytes each could exactly contain a tile of 1024 pixels of 4 bytes per pixel.

As mentioned above, one of the advantages of providing a buffer is that reformatting of the data can be achieved during transfer. To that end, the control means preferably includes an address generator for addressing locations in the buffer during each transfer. Thus, the address generator can cause data from the disk stores to be loaded into specific locations in the buffer and thereafter to be read from the buffer in a specified order. This would be useful where, for example, the data is to be transferred through a second interface in a manner which defines the image in a raster format while the same data is to be passed through the first interface in a manner which defines blocks of image pixels. Also it allows operations such as lateral reversal of an image or rotation by 90° or the transposition of rows and columns to be perfomed "on the fly".

In the preferred example, one of the second group of interfaces is connected to a video display frame store. Such a frame store will be coupled with a video monitor which displays an image in a raster form corresponding to data stored in the frame store. Typically, the size of the frame store will be greater than that needed to display an image on the monitor itself so that different sections of the image can be viewed relatively easily without the need to download data from the disk stores.

The bandwidth of the interconnecting data bus must be greater than the sum of the transfer rates of all the interfaces which may be involved in a set of simultaneous transfers. Normally, this would be checked initially by the control means before the transfers were initiated.

Other image processing equipment may be connected to the second group of interfaces, such as an image input scanner or an image output scanner of, for example, our Crosfield Magnascan type, a page planning system or an image modification system such as our Crosfield Studio system.

An example of an image processing system including a data handling device in accordance with the invention will now be described with reference to the accompanying drawings, in which:-

Figure 1 is a block diagram of part of the image processing system;

Figure 2 illustrates schematically the arrangement of the buffer shown in Figure 1;

Figure 3 illustrates the allocation of tiles of an image to the disk stores shown in Figure 1; and,

Figure 4 illustrates the software structure for controlling operation of the device.

GENERAL DESCRIPTION

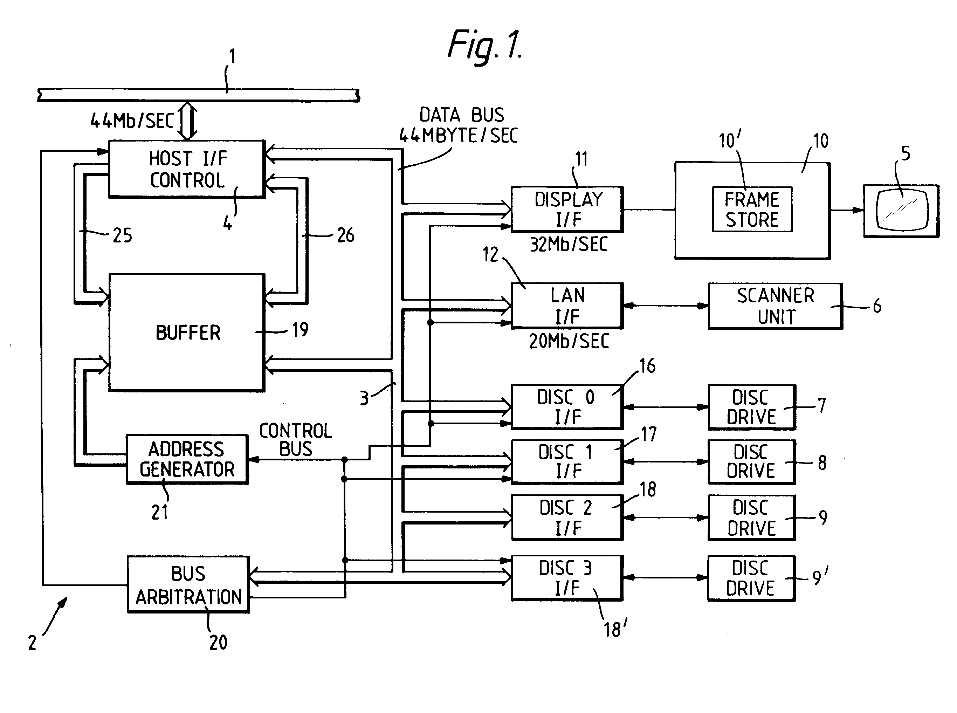

The system shown in Figure 1 comprises a host bus 1 of the type described in EP application No. 89301920.8 coupled with a host processor (not shown) and an image manipulation system which has also been omitted. The system also comprises an interface sub-system 2 having a primary data bus 3 which can carry data at 44 Mbyte/sec. The data bus 3 is coupled with the host bus 1 via a host interface unit 4. The data bus 3 is also connected to a number of other peripheral devices including a video monitor 5, a scanner unit 6 (which may comprise an input scanner, an output scanner or combined input and output scanners or any other device that may sink or source data eg. another system as described herein may be connected to the LAN network mentioned below) and a set of four disk drives 7 - 9, 9′. Each disk drive 7 - 9, 9′ includes a conventional Winchester Disk with a capacity of 300Mbytes. The monitor 5 is connected to a display controller 10 incorporating a video frame store 10′ which in turn is connected to the data bus 3 via a display interface 11. Typically, the display controller 10 will transfer data at a rate of 32 Mbyte/sec.

The scanner unit 6 is connected to the data bus 3 via a LAN interface 12 which can pass data at about 10Mbyte/sec.

The disk drives 7 - 9, 9′ are connected to the bus 3 via respective disk interface units 16 - 18, 18′. These interface units, of a standard type such as SCSI, can control devices of average data rate up to 4 Mbyte/second sending short bursts of data at higher rates to the bus 3. The disk drives, however, of a standard type, typically have an average data rate of only 1 - 2 Mbyte/second.

The data bus 3 is also connected to a 4 Mbyte buffer memory 19 which is constructed as a dual ported RAM. Data transfers on bus 3 to/from the buffer memory 19 may therefore occur at rates up to 44Mbyte/sec concurrently with data transfers on the host bus 1 to/from the buffer memories 19 at rates up to 44Mbyte/sec. The allocation of areas of this buffer to particular transfers of data between interface units is controlled by a bus arbitrator 20 via an address generator 21. The bus arbitrator incorporates a control microprocessor such as a Motorola 68020.

The operation of the system will now be illustrated by considering three typical transfer operations. Transfer 1 is a transfer of data from three of the disk drives 7-9 to the display controller 10; transfer 2 is a transfer of data from the scanner unit 6 to the three disk drives 7-9; and transfer 3 is a transfer of data from the three disk drives 7-9 to the host bus 1. The fourth disk drive 9′ allows for breakdown in any of the others.

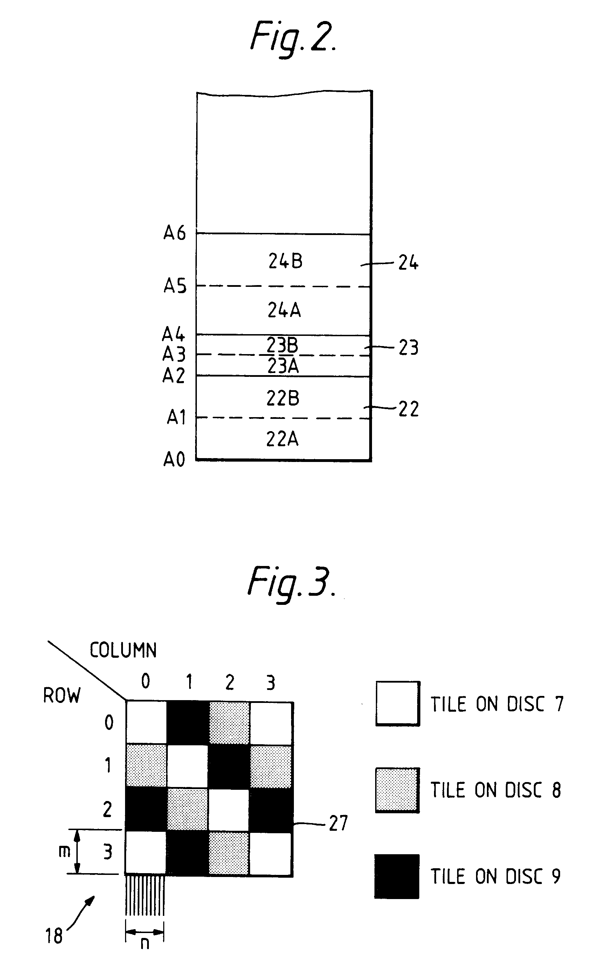

Once these three types of transfer have been defined, the bus arbitrator 20 considers the different data transfer rates involved and allocates in the buffer 19 three areas 22-24 (Figure 2) the areas having sizes chosen so as to optimise the overall data transfer operations and to enable these operations to take place without interrupting operation of the peripheral devices. Some peripheral devices described, such as the scanner, require "real time" data transfer to be maintained, that is they are time critical and cannot accommodate breaks in the transfer of data. Each buffer area 22-24 is divided by the bus arbitrator 20 into a pair of buffer sections 22A, 22B; 23A, 23B; and 24A, 24B starting at buffer addresses A0, A1, A2, A3, A4, A5 respectively. These addresses may change during the transfer operations. The bus arbitrator 20 then initiates transfer 1 by causing data on the disk drives 7-9 to be read and passed via the interface units 16-18 to the data bus 3. Sufficient data is read from the disks to fill section 22A of the buffer. The data is directed to that section of the buffer by the address generator 21 which is controlled to issue the start address A0 of the buffer section 22A and to increment the address for each successive data item. Once the section 22A is filled, this subsidiary transfer operation is terminated and the bus arbitrator 20 then decides whether that data should immediately be transferred in a second subsidiary operation to the display controller 10 or whether new data should be transferred in accordance with transfer 2 from the scanner to the buffer section 23A or in accordance with transfer 3 from the disk stores 7-9 to the buffer section 24A.

In this case, we will assume that the process will be optimised by transferring data from the scanner unit 6 via the interface unit 12 to the buffer section 23A. This section will be loaded with the data in a manner similar to the loading of the section 22A.

It may then be found appropriate to cause the data in buffer section 22A to be transferred to the display interface 11. While this transfer is taking place, a further transfer of data from the disk drives 7-9 can take place into the buffer section 24A until the bus arbitrator 20 determines that the level of data left in the buffer section 22A has fallen to a level such that further data will be required in order to continue with the transfer of data to the display controller 10. At that stage, the bus arbitrator 20 causes further data to be read from the disk drives 7-9 corresponding to transfer 1 into the section 22B so that when all data has been read from the buffer section 22A, further reading of data by the display interface can take place from the section 22B.

As can be seen, a number of "simultaneous" transfers can take place into and out of the buffer 19 and by using this double buffering technique a substantially continuous flow of data to and from the peripheral devices can take place.

The effect of providing separate address 25 and data 26 buses connecting the host interface with the buffer 19 allows simultaneous transfers to take place between the buffer 19 and the host interface 4 and via the data bus 3 with the other peripheral devices.

A typical input scanner will scan an original image in a large number of raster scanlines. An example of part of an image 27 is shown in Figure 3 with the scanlines schematically indicated at 28. Conventionally, the data derived from the scanning of a single raster scanline is stored directly on a disk store in the order in which the data was generated. This leads to difficulties where subsequently an operator wishes to view part of the image such as the square section with coordinates 0(row) 1(column) which is defined by the first part of a large number n of scanlines. Conventionally, to extract this portion of the image, it has been necessary for the disk drive to scan through the entire n raster scanlines and to pass only the data of interest to the data bus 3.

We now propose a new method of storing the data in the form of tiles of an image, the tiles being spread over a number of disk stores (in this example 3 but the system described can employ the same technique using any number of disk drives). Thus, as the data from a single scanline is generated, this data (in the case of the first scanline shown in Figure 3) is initially passed to one area of buffer 19 but it is then switched after a predetermined number m pixels during the same scanline to a second tile region of buffer 19 and subsequently to a third tile region while the remainder of the scanline is stored in subsequent tile regions. This series of storage steps is repeated for the n scanlines until all the tile regions in the buffer 19 have been filled. The tile regions can then be written to their respective disk drives, first tile to disk 7, second tile to disk 8, etc. Meanwhile a second set of tile regions in buffer 19 is being filled by the next n scanlines from the scanner. In order to optimise the time for retrieving an arbitrary-sized rectangular block of image data from the disk drives 7-9 the order of storage for each n scanlines is changed as shown in Figure 3 and this is repeated in sequence throughout the image.

It is necessary to perform this tiling of images as the data is transferred to and from the disk drives 7-9. This is because a scanner input/output device will typically transfer data in a raster image format, similarly a display control system may require data transfers in this format. The address generator 21 under control of the bus arbitrator 20 therefore enables the tiling and de-tiling of data by controlling the addresses of the buffer memory 19 during the data transfer. This is achieved without any restriction on the data transfer rates previously described. In this way the data transfers from up to four separate disk drives may be interleaved and delivered to an output scanner in a raster format. In effect the arbitrator can then schedule the data transfers of each individual disk drive to appear to be a single data transfer at a multiple of the data rate that can be supplied by one disk drive. For example, four low data rate disk drives (say 2Mbyte/sec) could be made to perform as if they were one disk drive operating at 8Mbyte/sec.

When the operator instructs the system to extract part of the image for display on the monitor, this form of storage enables blocks of the image to be much more quickly accessed.

## DETAILED DESCRIPTION

We will now describe in more detail certain aspects of the data handling device described above.

Channel Handler

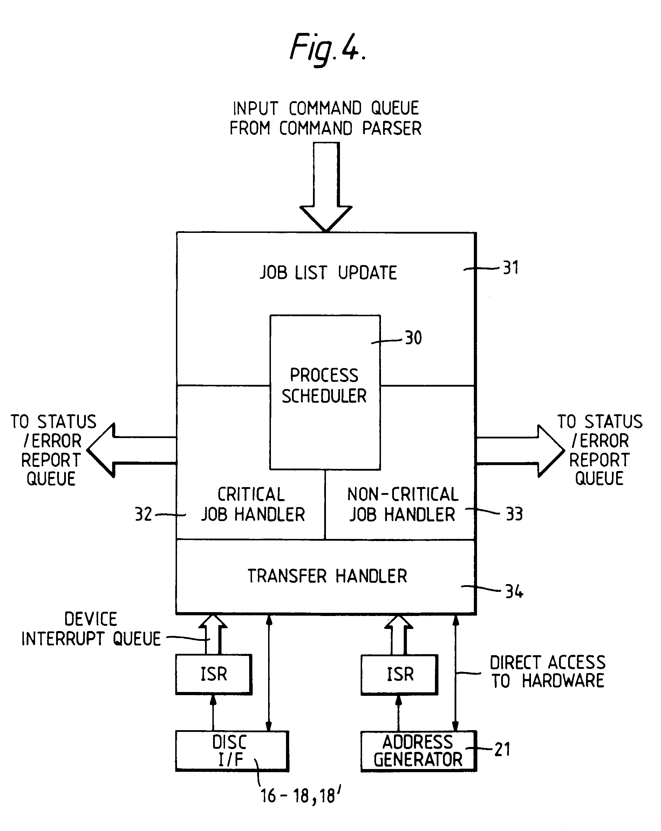

The bus arbitrator 20 can only handle (via a channel handler process) one subsidiary transfer operation at a time and hence a channel handler is a single task. This task consists of five main modules (Figure 4).

A) The process scheduler 30. This decides which action the channel handler will attempt next. The process scheduler has the option of starting one of three processes. If there are any critical jobs (transfers) which can be serviced, the scheduler starts them first. If there are no critical jobs which require servicing the scheduler looks for new jobs. If there is a new job pending, it adds the job to a correct job list (critical or non-critical) and then returns to see if there are any critical jobs which now need servicing, i.e. which have become serviceable while the new job was being added to the job list. If no critical jobs are outstanding and no new commands are pending, the scheduler will service any outstanding non-critical jobs.

B) The job update process 31. This maintains two job lists: one for critical jobs and another for non-critical jobs. Jobs are queued to the channel handler by a command parser.

C) The critical job handler 32 manages the time stamped buffer sections (to be described). These buffer sections are active if they are in the critical job list. Buffer sections only need attention if so indicated by their time stamps. When a buffer section needs attention the required transfer parameters are sent to the transfer handler. It is up to the critical job handler to remove jobs from the critical job list when they are complete. It will also inform the host processor that a job has been completed.

D) The non-critical job handler 33 uses the time between critical job services to process jobs from the non-critical job list. It uses the disc parameters and current disk status to calculate the amount of work it can get done in the time available. When the job description has been generated, this process sends the required transfer parameters to the transfer handler. When a non-critical job is complete, this process informs the command status/error reporter task.

E) The transfer handler 34 talks directly to the address generator 21 and the disk interfaces 16 - 18. While a transfer is in progress the whole channel handler is put to sleep. The channel handler is woken up when an interrupt service routine (ISR) indicates that a transfer is complete.

Memory Manager

A memory manager in the bus arbitrator 20 keeps track of memory usage by a double linked list of buffer section headers. Each buffer section header describes the buffer section associated with it. The linked list of headers describes a set of buffer sections that fully occupy the data memory.

A buffer header contains the following data fields.

1) The buffer section start address. This is the address of the first byte of the buffer section associated with this header.

2) The buffer section length. This is the length of the buffer section in bytes associated with this header.

3) The inuse flag. This flag is set while the buffer section is allocated. If this flag is not set the buffer section header is pointing to a block of free memory.

4) The full flag. This flag is set when the buffer section is full of valid data or is being emptied.

5) The busy flag. This flag is set when a process is modifying a buffer section i.e. emptying it or filling it.

The buffer section header also has two links. One link points to the buffer section header for the buffer section immediately above this buffer section and the other points to the buffer section immediately below this buffer section. This allows the memory manager to determine the state of adjacent buffer sections.

When the device is idle there is a single buffer section header. This buffer section header contains the start address of the buffer, the length of the buffer, and the inuse flag is clear indicating that the buffer is free.

When the memory manager requires a buffer section it searches the buffer section header list for a buffer section header where the inuse flag is clear. The memory manager checks whether the vacant buffer section is the correct size. Note that the buffer section must be, at the very least, the same size as the piece of memory that the memory manager is looking for. If there is more than one buffer section available of a size greater than the memory required, the memory manager can use a suitable algorithm to make a choice, e.g. best fit, worst fit, first found etc. If the buffer section selected is too big, two buffer section headers are generated where there was originally one. The first header describes a piece of the original buffer section the same size as the requested buffer section and is flagged as inuse. The second header points to the remaining memory which is flagged as not inuse.

When the memory manager releases or frees a buffer section, it marks the buffer section as not inuse. It checks the buffer sections immediately above and below it to see if either or both of these buffer sections are also free. If they are, the buffer section manager creates a single buffer section header which describes the whole free space.

Once a buffer section has been allocated it is likely to remain allocated for a long time (in the order of tens of minutes). While allocation continues the buffer sections of free memory are likely to get progressively smaller. It is possible that when the memory manager needs a free space, there will be enough space in the memory but it will be divided among a number of non-contiguous buffer sections (there will be no contiguous free buffer sections as they will already been concatenated). Non-contiguous buffer sections can be collected together using a system of buffer section migration described below.

Once a buffer section has been allocated it can be in one or four states; empty, filling, full, or emptying. While a buffer section is empty it can be moved simply by changing its start address. For example, if an allocated/empty buffer section is bounded by two free buffer sections it would be possible to create one allocated/empty buffer section and one larger free buffer section by moving the allocated buffer section, concatenating the two free space sections.

If a system is adopted where empty buffer sections are always moved up to occupy any free space above them, the free space will migrate down the memory. Provided that the free space is not used while it is migrating, it will eventually collect into one big free memory buffer at the bottom of the memory.

To make the memory manager secure it is run at a higher priority than any other process which is likely to manipulate the buffer data structure. This ensures that when the memory manager sees that a buffer section is empty and not busy, no other process can change this status while the buffer manager is updating the structures i.e. the memory manager operations are atomic. Given that memory manager operations are atomic, the memory manager can track the progress of emptying and filling thus determining the exact time at which a buffer section becomes either full or empty.

In order to track buffer section occupancy the memory manager makes use of the three as yet not described fields in the buffer header; the full flag, the busy flag, and the activity count. The full flag and the busy flag indicate the current condition of the buffer section.

| Buffer Section condition | Full Flag | Busy Flag |
| --- | --- | --- |
| Empty | 0 | 0 |
| Filling | 0 | 1 |
| Full | 1 | 0 |
| Emptying | 1 | 1 |
| Where 0 = clear and 1 = set | | |

The activity count is used to determine how many participants (fillers or emptiers) must complete their operation before the end condition is met i.e. buffer section full or buffer section empty.

To explain how the above fields are used, it is important to understand how the buffer sections are used. Buffer sections can be filled by multiple sources and emptied by a single sink, or can be filled by a single source and emptied by multiple sinks. The single sink or source is always responsible for synchronising data transfers.

In a single fill/multiple sink transfer the fields are used as indicated.

|  | Full Flag | Busy Flag | Act. Count |
|---|---|---|---|
| * Initially the empty processes are waiting on a signal and the fields in the buffer section header are set up as indicated. | 0 | 0 | 0 |
| * When a single filler is ready to fill a buffer section it sets the activity count to one indicating a single filler and sets the busy flag. | 0 | 1 | 1 |
| * When the single filler has finished filling the buffer section it signals the memory manager, indicating that it has finished its operation. |  |  |  |
| * The memory manager decrements the activity and determines from the flags that the last (and only) filler has completed and hence the buffer section is full and no longer busy. The memory manager can do nothing with a full buffer section so it just updates the statuses. | 1 | 0 | 0 |
| * The single filler sets the activity count to the number of emptiers. | 1 | 0 | 2 |
| * The single filler signals that a full buffer section is now available. |  |  |  |

At this stage the emptiers become aware that a full buffer section is available and make arrangements to do their share of emptying.

| * When an emptier is ready to start processing the buffer section it sets the busy flag (regardless of | 1 | 1 | 2 |

```
        its current state) and starts to empty
        the buffer section.
*       When the emptier has finished its        1      1      2
        part it signals the memory manager.


        Each time the memory manager receives a signal from
an emptier it decrements the activity count.  When the
activity count in the buffer section header reaches zero,
the last emptier has completed and the buffer section
must  therefore  be  empty.  At  this  stage  the  buffer
section is moved if necessary and then marked as not full
and not busy.


*       The single filler waits for the buffer  0      0      0
        section to be marked not full before
        attempting to fill it.
```

The single fill/multiple sink example has now come full circle.

Time Sharing Policy

The objective of the device is to ensure that all critical transfers are able to complete without incident. At the same time it must also ensure that non-critical transfers are not unnecessarily delayed. The scheduling policy outlined below will satisfy these two requirements.

The scheduling policy relies on the fact that while image scanners have a high burst data rate, their sustained data rate over long periods of time is much lower. By using large buffer sections, this low sustained data rate can be taken advantage of. In fact, each scanner transfer will use two large buffer sections. One buffer section will be filled or emptied by the scanner while the other is being emptied or filled by one or more disks. The buffer section sizes will be chosen so that all the scanners in the system will fill or empty a buffer section in about the same interval of time. It is not possible to balance exactly the filling and emptying because the buffer sections also have to be sized so that they will hold an integral number of tile columns.

A single disk has a sustained data rate which is about the same as a scanner's burst rate. This means that a single disk's data rate is normally much faster than the scanner's sustained data rate. As large buffer sections are being used, a single disk would therefore be able to empty a buffer section much faster than a scanner could fill it. In fact, as several disk channels will be emptying a single buffer, the participating disk channel will not be fully occupied. This free time will be used to service other critical scanner transfers, or, if no critical transfers are active, to service non-critical transfers.

To synchronise all activities and allow the device to manage all the data transfers, buffer sections will be time stamped. The exact meaning of the time stamp depends on whether the critical resource is filling or emptying a buffer section. In both cases the general meaning of the time stamp is the same. All timing can be controlled by the critical resource.

A time stamp has the following three parts:-

* The time that the critical resource last used the buffer section. This can be either the time that a critical resource finished filling a buffer section, or the time that a critical resource finished emptying a buffer section.
* The time that a critical resource will want to use the buffer section again.
* The last possible time that the disk can process the buffer section and have finished before the buffer section is needed again.

9

These time stamps are used as described below:-

The Use of Time Stamps When a Scanner is Filling a Buffer Section

**Step 1.**

| Time Source Buffer Section filled | Null |
|---|---|
| Last possible Source Buffer Section empty time | Null |
| Time of next Destination buffer section fill | Null |

The above diagram shows the state of the time stamp when a critical job has just been started. The disk does not need to do anything with this buffer section.

**Step 2.**

| Time filled | Null |
|---|---|
| Last possible empty time | Null |
| Time of next fill | Value 1 |

Now the scanner has started to fill the buffer section. The disk must not start a non-critical job that will finish after the time given in 'Time of next fill'.

**Step 3.**

| Time filled | Value 1' |
|---|---|
| Last possible empty time | Value 2 |
| Time of next fill | Value 2 |

The scanner has now filled the buffer section. The device chooses the oldest 'Time filled' as the next critical job. Note if the current time is beyond the 'Last possible empty time' it is too late to service this buffer section and the job must be aborted.

Step 4.

| Time filled | Null |
|---|---|
| Last possible empty time | Null |
| Time of next fill | Value 2 |

The device flags the buffer section as empty by clearing the 'Time filled' and the 'Last possible empty time'. The buffer section now has the same status as it had in Step 2. While the buffer sections need to be filled by a scanner this process cycles between step 4 and step 2. The transfer is completed if the time stamp looks like the buffer section in Step 5 below.

Step 5.

| Time filled | Value 2' |
|---|---|
| Last possible empty time | Value 3 |
| Time of next fill | Null |

The last buffer section has no 'Time of next fill' value, but the rules in step 3 above still apply.

Step 6.

| Time filled | Null |
|---|---|
| Last possible empty time | Null |
| Time of next fill | Null |

The transfer is complete and the device can now tell the host that its part of the job is finished.

11

Use of Time Stamps When Data is Transferred from the Disk Store to a Display System

Step 1.

| Time Destination Buffer Section emptied | Null |
|---|---|
| Last possible Destination Buffer Section fill time | Null |
| Time of next source Buffer Section empty | Null |

The job has just been presented to the host. Nothing is known about the buffer section so the device does not need to consider it in its scheduling.

Step 2.

| Time emptied | Null |
|---|---|
| Last possible fill time | Null |
| Time of next empty | Value 1 |

When the display system is ready to start, it supplies the 'time of next empty' value. This value is one cycle from the current time. A cycle is the universal time that a critical consumer takes to fill/empty a buffer section. This action prevents the device from scheduling a non-critical job which would prevent filling the buffer section.

Step 3.

| Time emptied | Value 1' |
|---|---|
| Last possible fill time | Value 2 |
| Time of next empty | Value 2 |

The display system supplies the full time stamp. The job is now active. The device chooses the oldest 'Time emptied' value from all the active jobs and then fills that buffer section. The display system will actually start to use it's first buffer section when the current time is equal to the 'Time of next empty'.

Step 4.

| | |
|---|---|
| Time emptied | Null |
| Last possible fill time | Null |
| Time of next empty | Value 2 |

The device clears the 'Time emptied' value to indicate that the buffer section has been serviced.

Step 5.

| | |
|---|---|
| Time emptied | Value 2' |
| Last possible fill time | Value 3 |
| Time of next empty | Value 3 |

The display system has started emptying the previous buffer section here and is now asking for the next buffer section to be filled.

Step 6.

| | |
|---|---|
| Time emptied | Null |
| Last possible fill time | Null |
| Time of next empty | Value 3 |

The cycle has now come back around to Step 4. This continues until the last buffer section is about to be processed.

Step 7.

| Time emptied | Value 3' |
| Last possible fill time | Value 4 |
| Time of next empty | Null |

The last buffer section in the sequence has no 'time to next empty'. This shows that there are no more buffer sections which need be filled by the disc.

Step 8.

| Time emptied | Null |
| Last possible fill time | Null |
| Time of next empty | Null |

The transfer of the whole image is complete when all the values in the time stamp have been cleared.

Data Bus Structure

The internal bus transfers are controlled by the address generator 21 running synchronously with the data (16MHz). Transfer frames will contain 8 words of 32 bits, each frame will be 720 ns. This enables direct transfer onto the host bus when the board acts as a Virtual address space master.

The desired transfer (source/dest address, word count, file parameters) is set up by the 68020 microprocessor and carried out when data becomes available. Transfers of 128 pixels occur whenever possible, each slow device has a fifo at the internal data bus port which will enable transfers of data at the correct burst rate. These fifos will have a status flag indicating that there are 128 pixels in the fifo or there is space for 128 pixels. The address generator 21 looks for these flags before transferring the data.

Buffer Memory

The 4 Mbyte dual port buffer memory 19 is used for tile/detile operations and for general data buffering. The address is supplied by the address generator 21 which is able to calculate the relevant addresses needed to tile/detile image data for the disk storage. To set up the transfer the 68020 has to pass the following parameters.
a) Start address in buffer RAM.
b) Transfer count being the counter for the entire transfer consists of a number of parameters:-
    i) Transfer block size (typically 128 pixels). Selectable in multiples of 8 pixels (32 bytes).
    ii) Tile height (blocks in line segment).
    iii) Tile width (typically 8 lines).
    iv) Tiles in column of image.
    v) Columns in buffer.
c) Source and destination of transfer (4 bits describe each) and an 8-bit control word (priority etc.).
d) The line length of the source image.
e) Tile width (typically 8 lines).
f) Offset between end of tile line and start of next inside a tile.

14

g) Offset between end of tile and start of next tile.

The parameters c) - g) are default and set up once by the 68020, only a) and b) are required to describe each individual transfer. The Address Generator 21 can be given multiple transfers to run concurrently (typically 16), while sequencers in the address generator will perform each transfer when there are 128 words available.

The other port of the buffer memory 19 is used with the host bus 1 for Virtual Slave operations. The buffer has to be dual ported because the host bus accesses have no wait states, transfers have to be guaranteed at the correct time. If the host bus access were given a top priority on a single ported system then the host bus port could use all of the available bandwidth. Any host bus Virtual Space master may read or write data into the buffer memory 19, these transfers are fully concurrent with internal bus operation on the buffer memory.

Disc Interfaces

The disc interfaces 16 - 18, 18' have a 2K x 32 fifo and a WD 33C93 SCSI control IC. Control information is supplied from a port on the 68020 bus. The fifo is used to synchronise the slow SCSI (disc) device with the internal data bus 3. A typical transfer would involve the 68020 setting up the WD33C93 to read or write a number of logical blocks, the 68020 will set up the transfer parameters in the address generator 21. The transfer will then take place under the control of the sequencer in the address generator. When finished the WD33C983 will interrupt the 68020, by the time the interrupt has been serviced and 68020 parameters updated the sequencer will have completed the last transfer. When the transfer count is complete the address generator will be able to read the next transfer parameters.

**Claims**

1.  A data handling device for handling data defining the colour content of pixels of an image, the device comprising a number of data transfer interfaces (11,12,16-18,18') for interfacing a data bus (3) to a number of peripheral devices (6-10,9') and including a first group of interfaces (16-18,18') for connection to at least two disk stores, and at least one second group of interfaces (11,12) for connection to one of a data source and one of a data destination; said device further comprising control means (20,21) for controlling the data transfer operations between selected pairs of the interfaces and predetermining the duration thereof; said device being characterised in that it further comprises a buffer (19) connected to the data bus (3); in that the control means (20,21) controls the transfer of data between selected pairs of the interfaces via the buffer (19) such that each data transfer operation is carried out in a number of sequential but not necessarily consecutive subsidiary transfer operations, each of said subsidiary transfer operations being a non-interruptible data transfer between one of the selected interfaces and the buffer, the control means allowing interlacing of intermediate subsidiary transfer operations for other interfaces, and further predetermining the duration of the subsidiary transfer operations for each interface and the amount of memory required in the buffer to be allotted to each transfer operation, whereby the overall data transfer is optimised by maximizing the bus bandwidth being utilised and by enabling said data transfer operations to take place without interrupting the operation of the peripheral devices; in that the control means causes data defining two-dimensional blocks of pixels, each block made up by n x m pixels, where both n and m are greater than one and where each block corresponds to a number of sections of the original raster scanlines, to be stored on different disk stores connected to the first group of interfaces in use.

2.  A device according to claim 1, wherein the control means (20, 21) defines for each selected pair of interfaces a respective area (22 - 24) of the buffer (19) having two sections (22A, 22B; 23A, 23B; 24A, 24B), the control means causing data in a first subsidiary transfer operation to be transferred from one interface to one section of the buffer, in a second subsidiary operation to cause data to be transferred from that section of the buffer to the other interface, in a third subsidiary transfer operation to cause data to be transferred from the one interface to the other section of the buffer, and in a fourth subsidiary operation to cause data from the second section to be transferred to the other interface.

3.  A device according to claim 1 or claim 2, further comprising at least two asynchronously driven disk stores (7 - 9, 9') connected to the first group of interfaces (16 - 18, 18').

**4.** A device according to any of the preceding claims, wherein one of the second group of interfaces (11) is connected to a video display frame store (10').

**5.** A device according to any of the preceding claims, wherein one of the second group of interfaces (12) is connected to an image input scanner (6).

**6.** A device according to any of the preceding claims, wherein the control means (20, 21) causes data to be transferred to at least one of the second group of interfaces in a manner which defines the corresponding portion of an image in a raster format.

**7.** A device according to any of the preceding claims, wherein the control means includes an address generator (21) for addressing locations in the buffer (19) during each transfer.

**8.** A device according to any of the preceding claims, wherein the number of bytes in each block is a multiple of the size of a formatted disk store sector.

**9.** A device according to any of the preceding claims, wherein each pixel is defined by more than one colour component, the control means (20, 21) being adapted to cause data defining all the colour components of each block to be stored on the same disk store.

**10.** A device according to any of the preceding claims, wherein one of the second group of interfaces (11) is connected to a video display frame store (10') and a video monitor (5), the size of the largest image which can be displayed on the video display (5) being smaller than an image stored on disk stores connected to the first group of interfaces.

**Patentansprüche**

**1.** Datenverarbeitungseinrichtung zum Verarbeiten von den Farbgehalt der Pixel eines Bildes darstellenden Daten, bestehend aus:

mehreren Datenübertragungs-Schnittstellen (11,12,16 bis 18, 18') zum Anschluß eines Datenbus (3) an mehrere periphere Geräte (6 bis 10, 9'), mit einer ersten Gruppe von Schnittstellen (16 bis 18, 18') zum Anschluß an mindestens zwei Plattenspeicher und mit mindestens einer zweiten Gruppe von Schnittstellen (11,12) zum Anschluß jeweils an eine Datenquelle und an einen Datenempfang; ferner mit einer Steuereinrichtung (20,21) zum Steuern der Datenübertragungsoperationen zwischen ausgewählten Paaren der Schnittstellen und zum Vorherbestimmen von deren Dauer; dadurch gekennzeichnet, daß ferner ein an den Datenbus (3) angeschlossener Speicher (19) vorgesehen ist, daß die Steuereinrichtung (20,21) die Datenübertragung zwischen ausgewählten Paaren der Schnittstellen über den Speicher (19) derart steuert, daß jede Datenübertragungsoperation in mehreren aufeinanderfolgenden, jedoch nicht notwendigerweise fortlaufenden Hilfsübertragungsoperationen ausgeführt wird, wobei jede Hilfsübertragungsoperation eine nicht unterbrechbare Datenübertragung zwischen einer der ausgewählten Schnittstellen und dem Speicher ist, wobei die Steuereinrichtung ein Verschachteln von dazwischen liegenden Hilfsübertragungsoperationen für andere Schnittstellen gestattet und die Dauer der Hilfsübertragungsoperationen für jede Schnittstelle und die im Speicher für jede Übertragungsoperation zuzuteilende erforderliche Speicherkapazität bestimmt wird, wodurch die gesamte Datenübertragung durch Maximieren der benutzten Busbandbreite optimiert wird und dadurch das Durchführen der Datenübertragungsoperationen ohne Unterbrechen des Betriebsablaufs der peripheren Geräte ermöglicht wird; und daß die Steuereinrichtung veranlaßt, daß zweidimensionale Pixelblöcke definierende Daten in unterschiedlichen, an die erste Gruppe der Schnittstellen in Benutzung angeschlossene Plattenspeicher gespeichert werden, wobei jeder Block aus n x m Pixel mit n sowie m > 1 besteht und jeder Block einer Anzahl von Abschnitten der originalen Rasterabtastzeilen entspricht.

**2.** Einrichtung nach Anspruch 1, wobei die Steuereinrichtung (20,21) für jedes ausgewählte Paar Schnittstellen je einen Bereich (22 bis 24) des Speichers (19) mit zwei Abschnitten (22a, 22b; 23a, 23b; 24a, 24b) definiert, die Steuereinrichtung veranlaßt, daß die Daten in einer ersten Hilfsübertragungsoperation von einer Schnittstelle zu einem Abschnitt des Speichers übertragen werden, in einer zweiten Hilfsoperation die Daten von diesem Abschnitt des Speichers zu der anderen Schnittstelle übertragen werden, in einer dritten Hilfsübertragungsoperation die Daten von der einen Schnittstelle zum anderen Abschnitt des Speichers übertragen werden und in einer vierten Hilfsoperation die Daten von dem zweiten Abschnitt zur anderen Schnittstelle übertragen werden.

3. Einrichtung nach Anspruch 1 oder 2, ferner bestehend aus mindestens zwei asynchron angetriebenen Plattenspeichern (7 bis 9, 9'), die an die erste Gruppe Schnittstellen (16 bis 18, 18') angeschlossen sind.

4. Einrichtung nach einem der vorhergehenden Ansprüche, wobei eine Schnittstelle (11) der zweiten Schnittstellengruppe an einen Videoabbildungsrahmenspeicher (10') angeschlossen ist.

5. Einrichtung nach einem der vorhergehenden Speicher, wobei eine Schnittstelle (12) der zweiten Schnittstellengruppe an einen Bildeingangscanner (6) angeschlossen ist.

6. Einrichtung nach einem der vorhergehenden Ansprüche, wobei die Steuereinrichtung (20,21) veranlaßt, daß Daten an mindestens eine Schnittstelle der zweiten Schnittstellengruppe in einer Weise übertragen werden, die den entsprechenden Bildteil in einem Rasterformat definiert.

7. Einrichtung nach einem der vorhergehenden Ansprüche, wobei die Steuereinrichtung einen Adressengenerator (21) zum Adressieren von Speicherstellen im Speicher (19) während jeder Übertragung aufweist.

8. Einrichtung nach einem der vorhergehenden Ansprüche, wobei die Bytezahl in jedem Block ein Mehrfaches der Größe eines formatierten Plattenspeicherabschnitts beträgt.

9. Einrichtung nach einem der vorhergehenden Ansprüche, wobei jedes Pixel von mehr als einer Farbkomponente definiert wird, die Steuereinrichtung (20,21) veranlaßt, daß alle Farbkomponenten jedes Blocks definierende Daten in dem gleichen Plattenspeicher abgespeichert werden.

10. Einrichtung nach einem der vorhergehenden Ansprüche, wobei eine Schnittstelle (11) der zweiten Schnittstellengruppe an einen Videoabbildungsrahmenspeicher (10') und einen Videomonitor (5) angeschlossen sind, und die Größe des größten am Videobildmonitor (5) abgebildeten Bildes kleiner ist als ein in dem an die erste Schnittstellengruppe angeschlossenen Platenspeicher gespeicherten Bild.

**Revendications**

1. Dispositif de traitement de données pour traiter des données définissant le contenu de couleur des éléments d'une image, le dispositif comprenant un certain nombre d'interfaces de transfert de données (11,12,16-18, 18') pour relier un bus de données (3) à un certain nombre de dispositifs périphériques (6-10,9') et incluant un premier groupe d'interfaces (16-18,18') pour une connexion à au moins deux mémoires à disques, et au moins un deuxième groupe d'interfaces (11,12) pour une connexion à un d'un émetteur de données et un d'un récepteur de données; ledit dispositif comprenant en outre un moyen de commande (20,21) pour commander les opérations de transfert de données entre des paires sélectionnées des interfaces et pour prédéterminer leur durée; ledit dispositif étant caractérisé en ce qu'il comprend en outre un tampon (19) connecté au bus de données (3); en ce que le moyen de commande (20,21) commande le transfert de données entre des paires sélectionnées des interfaces par le tampon (19) de telle sorte que chaque opération de transfert de données est exécutée au cours d'un certain nombre d'opérations de transfert séquentielles mais non nécessairement consécutives secondaires, chacune desdites opérations de transfert secondaires étant un transfert de données non interruptible entre une des interfaces sélectionnées et le tampon, le moyen de commande permettant l'intrelacement d'opérations de transfert secondaires intermédiaires pour d'autres interfaces, et prédéterminant en outre la durée des opérations de transfert secondaires pour chaque interface et la capacité de mémoire nécessaire dans le tampon à affecter à chaque opération de transfert, l'ensemble du transfert des données étant ainsi rendu optimal au augmentant au maximum la largeur de bande de bus mise en oeuvre et en permettant que lesdites opérations de transfert de données aient lieu sans interruption du fonctionnement des dispositifs périphériques; en ce que le moyen de commande fait en sorte que les données définissant des blocs bidimensionnels d'éléments d'image, chaque bloc étant constitué par nxm éléments d'image, où n et m sont tous les deux supérieurs à un et où chaque bloc correspond à un certain nombre de parties des lignes de balayage récurrent initiales, soient mémorisées dans différentes mémoires à disques connectées au premier groupe d'interfaces en fonctionnement.

**2.** Dispositif selon la revendication 1, dans lequel le moyen de commande (20,21) définit pour chaque paire d'interfaces sélectionnée une zone respective (22-24) du tampon (19) comportant deux parties (22A,22B;23A,23B; 24A,24B), le moyen de commande faisant en sorte que des données soient transférées au cours d'une première opération de transfert secondaire d'une interface à une partie du tampon, qu'au cours d'une deuxième opération secondaire des données soient transférées de cette partie du tampon à l'autre interface, qu'au cours d'une troisième opération de transfert secondaire des données soient transférées de l'interface à l'autre partie du tampon, et qu'au cours d'une quatrième opération secondaire des données soient transférées de la seconde partie à l'autre interface.

**3.** Dispositif selon l'une quelconque des revendications 1 et 2, comprenant en outre au moins deux mémoires à disques commandées d'une façon asynchrone (7-9,9') connectées au premier groupe d'interfaces (16-18,18').

**4.** Dispositif selon l'une quelconque des revendications 1 à 3, dans lequel une du deuxième groupe d'interfaces (11) est connectée à une mémoire d'images de visualisation (10').

**5.** Dispositif selon l'une quelconque des revendications 1 à 4, dans lequel une du deuxième groupe d'interfaces (12) est connectée à un analyseur d'entrée d'images (6).

**6.** Dispositif selon l'une quelconque des revendications 1 à 5, dans lequel le moyen de commande (20,21) fait en sorte que des données soient transférées dans au moins une du deuxième groupe d'interfaces d'une manière qui définit la partie correspondante d'une image dans un format de trame.

**7.** Dispositif selon l'une quelconque des revendications 1 à 6, dans lequel le moyen de commande inclut un générateur d'adresse (21) pour adresser des emplacements du tampon (19) pendant chaque transfert.

**8.** Dispositif selon l'une quelconque des revendications 1 à 7, dans lequel le nombre de multiplets dans chaque bloc est un multiple de la dimension d'un secteur de mémoire à disques après formatage.

**9.** Dispositif selon l'une quelconque des revendications 1 à 8, dans lequel chaque élément d'image est défini par plus d'une composante de couleur, le moyen de commande (20,21) étant agencé pour faire en sorte que les données définissant toutes les composantes de couleur de chaque bloc soient mémorisées dans la même mémoire à disques.

**10.** Dispositif selon l'une quelconque des revendications 1 à 9, dans lequel une du deuxième groupe d'interfaces (11) est connectée à une mémoire d'images de visualisation (10') et à un récepteur vidéo (5), les dimensions de l'image la plus grande pouvant être visualisée sur le récepteur vidéo (5) étant inférieures à celles d'une image mémorisée dans les mémoires à disques connectées au premier groupe d'interfaces.

Fig.1.

EP 0 332 417 B1

# Fig.2.

# Fig.3.

# Fig.4.

INPUT COMMAND QUEUE
FROM COMMAND PARSER

JOB LIST UPDATE — 31

PROCESS — 30
SCHEDULER

TO STATUS
/ERROR
REPORT
QUEUE

TO STATUS
/ERROR
REPORT
QUEUE

32 — CRITICAL
JOB HANDLER

NON-CRITICAL
JOB HANDLER — 33

TRANSFER HANDLER — 34

DEVICE
INTERRUPT QUEUE

ISR

ISR

DIRECT ACCESS
TO HARDWARE

DISC
I/F

ADDRESS
GENERATOR — 21

16 – 18,18'

21